# EUROPEAN PATENT APPLICATION

(11) **EP 1 970 690 A2**
(43) Date of publication of application: **17.09.2008**
(21) Application number: 08380066.4
(22) Date of filing: 05.03.2008
(51) Int. Cl.: G01M 11/06

(54) **Headlight evaluation process**

(30) Priority: 15.03.2007 ES 200700691
(71) Applicant: Seat, S.A., 08760 Martorell (ES)
(72) Inventor: Carrasco I Garcia, Jordi c/o Seat, S.A., 08760 Martorell-Barcelona (ES); Dorca I Badia, Francesc c/o Seat, S.A., 08760 Martorell-Barcelona (ES); Paredes Dominguez, Magnolia c/o Seat, S.A., 08760 Martorell-Barcelona (ES); Alvarez Lopez, José Manuel c/o Seat, S.A., 08760 Martorell-Barcelona (ES); Lopez Peña, Antonio Manuel c/o Seat, S.A., 08760 Martorell-Barcelona (ES); Lumbreras Ruiz, Felipe c/o Seat, S.A., 08760 Martorell-Barcelona (ES); Serrat Gual, Joan c/o Seat, S.A., 08760 Martorell-Barcelona (ES)
(74) Representative: Carvajal y Urquijo, Isabel

(57) **Abstract**

The invention relates to a headlight evaluation process comprising at least the following steps:
- placing the beacons [3] along the circuit;
- placing the recording means [2] in the windshield [5] of the vehicle being tested;
- adjusting the recording means [2];
- acquiring sequences;
- synchronizing the results of different tests.

By means of this process, nighttime tests conducted with different headlights are recorded and they are compared in real time for greater objectivity and optimization of the results.

## Description

### Object of the Invention

The system object of the present invention relates to an evaluation process for evaluating the features of the headlights of an automobile, which allows recording nighttime tests conducted with different headlights and comparing them in real time for greater objectivity and optimization of the results.

### Background of the Invention

Dynamic tests for evaluating headlights are currently conducted by means of a classic method consisting of doing a series of laps in a test circuit while the pilot observes the performance of the headlights in nighttime conditions but with no recording thereof which allows giving a second opinion. Once the tests are completed, the participants fill in a questionnaire in order to evaluate the features of the headlights. This evaluation is evidently subjective, since it depends on the perception of the participant, which will in turn depend on the concentration during the test and does not allow the possibility of comparison between the different tests.

The current evaluation process is exclusively based on the form duly completed during the test, therefore the objectivity of the result is limited by the perception of the tester. In addition, conducting the test is unique since it is not recorded, whereby it is not possible to view the test again in order to be able to compare the results. This fact implies that the directing team has to travel to the test circuit in order to be able to supervise the results.

### Description of the Invention

The headlight evaluation process, object of the present invention is set forth to palliate or eliminate the aforementioned drawbacks.

Different tests can be recorded thanks to the headlight evaluation process, which will subsequently allow comparing the results between different headlight models. In order to carry out these comparisons, the recorded videos must be synchronized according to common reference points for a greater reliability of the comparison.

The nighttime filming system is formed by recording means for recording the tests conducted, a plurality of beacons which will be useful as reference points in the synchronization of the tests and synchronization and comparison means for synchronizing and comparing records of the different tests conducted.

This system allows recording the different tests conducted and therefore, subsequently displaying them whenever necessary. The fact of having the record of different tests allows the comparison between them and the possibility of detecting any difference, therefore the final result is more objective because in this way, not only the form of the participant is analyzed but a record of the test which has just been conducted is furthermore obtained. As a result of this system, only the minimum team has to travel to the test circuit in order to conduct the test.

The headlight evaluation process comprises the use of at least:
- recording means;
- a plurality of beacons;
- synchronization and comparison means for synchronizing and comparing records of the tests;
wherein the process comprises the following steps:
- placing the beacons along the circuit which allow establishing the reference points taking into account that:
   ○ the initial mark are two beacons, one of which is placed at least one meter from the starting line and the other of which is placed at the start itself;
   ○ the following beacons are placed at a specific distance which will change according to the circuit;
- placing the recording means in the windshield of the vehicle being tested, which in turn comprises the following steps:
   ○ noting down the test data;
   ○ checking the position of the angular field close-up lens;
   ○ loading the tape which will be used to record the tests;
   ○ placing the recording means in the base of the support and adjusting the screws supporting the recording means and those of the different hinges of the support;
   ○ adjusting the position and angle of the recording means: the intention is to obtain sequences with a similar point of view although they are taken on different days. To ensure the similarity between.tests, it is convenient to carry out these adjustments in the area for preparing the circuit and always in the same manner. The rear wheels of the car must be supported on the platform of the elevator. A reference beacon centered in relation to the main axis of the car will be placed at a distance of no less than a 17 m from the recording means. To search for the main axis of the car, the car can be looked at from behind such that the beacon is seen aligned with the inner rearview mirror and the antenna, for example;
   ○ choosing a centered point in the windshield with a height similar to that of the driver's point of view.
   ○ locating the suction cup in the suitable position in which the optics of the recording means are as close as possible to the previously chosen point;
   ○ adjusting the roll angle to achieve that the recording means are perpendicular to the ground. Once the perpendicular position of the recording means has been obtained, the suction cup lever will be actuated to fix this first degree of freedom. To verify that this orientation has been achieved, the scene will be viewed with the recording means turned on but without recording, and the horizon, which must be horizontal, will be seen on the screen. It is understood that the car rests on a planar surface without any type of inclination;
   ○ adjusting the pitch and yaw angles: To finish centering the recording means, the captured image of the beacon that was previously placed in front of the car at 17 m will be used. A good orientation will be achieved if it is achieved that the image of said beacon is formed at the center of the image. The pitch and yaw angles are associated to the movements of the support and of the base of the recording means:
      ■ rough adjustment: With the recording means turned on, viewing (without recording) and with the field open as much as possible (without zoom), the beacon will be searched for by moving the recording means (not the suction cup) with the two remaining degrees of freedom (yaw on the screw of the base of the recording means, and pitch on the hinge of the support starting from the suction cup.
      ■ fine adjustment: The recording means will now work with their maximum zoom, but as the latter is achieved, the attempt will be made to not lose sight of the beacon at the center of the screen. When the image of the beacon is well centered, the attachments (that of the base and that of the support) will be tightened without changing the position of the recording means. The final position will be the maximum field of view (minimum zoom) again.
- Adjusting the parameters of the recording means: The parameters related to the operation of the recording means must then be adjusted to ensure the repetitiveness of the acquisition. The general idea sought with this choice is to achieve the maximum quality that the recording means can provide:
   ○ Exposure: At the maximum, to allow capturing the largest amount of light of a poorly illuminated scene.
   ○ Focus: Infinity focus, as it does not differ very much from the optimal focus distance for these tests and is a value that can be easily achieved and remembered.
   ○ Mode: the mode with the highest quality.
   ○ Format: 16:9, it is the format providing the greatest angular field of view and therefore allows seeing the side parts which are also interesting for analysis.
   ○ Gain: The automatic gain, if it is exists, is deactivated because it negatively affects the noise level of the image.
   ○ Progressive recording: Activated. This mode prevents the interlacing effect in the video.
   ○ White balance: Always the same balance and allowing a subsequent viewing consistent with reality.
- Acquiring sequences: In the event of a car change, a return must be made to the previous point to ensure an optimal adjustment. This step in turn comprises the following steps:
   ○ In the circuit, there is a single direction of movement so changes of direction and driving in reverse are not possible. The following steps must be followed:
      ■ Entering the track and doing a lap until being placed at the starting point which is located before the double mark (at a distance of approximately 50 m, centered in the lane). The two beacons will be seen on the screen.
      ■ It will be checked that the viewing is correct.
      ■ Noting down the information that will be needed later in the video annotation form: driver, car, headlights, time, etc.
      ■ Passing to recording mode. At this time, the data noted down in the test sheet can be read aloud so that there is evidence of the test in the tape audio.
   ○ The movement will be started such that there is a stable speed upon passing over the starting double mark. The run will be made at a speed of 50 Km/h This speed has been chosen so that the driving is comfortable and allows controlling the car at all times. The speed variations should not exceed the range (40 - 60 Km/h). To finish, the starting double mark, which in this case also acts as the final mark, will be passed at the established speed. Stop the recording by pressing the REC button again.
   ○ Finish doing the lap to leave the circuit or to return to the starting position. If the test is conducted again with this vehicle, it will go back to the starting point and the entire process of this section will be repeated.
   ○ After the tests: remove the support from the windshield, release the recording means from the support and take the tape out.
   ○ Block the tape to prevent an accidental erasure.
   ○ Collect and store all the material.
   ○ Count the collected beacons.
- Once the sequences considered to be suitable have been taken, a series of steps must be followed for the correct synchronization of different tests by the synchronization means, in turn comprising:
   ○ Database initialization, wherein the user first has to enter data describing the future video sequences. This data can subsequently be associated to each new input sequence and can be used to retrieve from the database, containing all the sequences, the pair of videos that the user wants to compare, i.e. view together, once they have been synchronized. All the data is textual type data (type of headlights, driver, vehicle, recording means etc.) except one, the location. A location is a special video sequence which is taken as reference for the remaining sequences filmed in the same track. A set of beacons are placed within this sequence. The frame numbers in which they appear in a certain region of the image are stored in the database for the synchronization.
   ○ A video capture module of the recording means. The user can control the recording means through the graphical user interface, providing the common play, pause, recording, stop, rewind/fast forward buttons. The user can thus select the initial and final points in a lap. The sequences are stored, in order to be subsequently noted down.
   ○ Means for noting down the test data: it is the association of data, mainly text data, to a captured video sequence. This data will later be useful for selecting the desired sequence by means of queries to the database of all the sequences. For example, the user can consult the sequences between two certain dates with a certain type of headlights and vehicle model. A key piece of data to be associated to a sequence is its location, i.e. the track in which it was filmed. Obviously, it only makes sense to synchronize a pair of noted down sequences associated to one and the same location.
   ○ Test synchronization means: when the user has introduced a new location in step 1, he or she has not only specified the name of the reference video for a certain track, but also the frame numbers in which the beacons are observed. To synchronize a certain sequence with any other sequence of the same location, all these beacons must be placed again, but in the new sequence. This can be carried out automatically but a 100% correct detection is not ensured, since it depends mainly on the specific track, on the headlights and on the driving speed. Therefore, the user must verify the result and if it is necessary to correct errors (lost or badly placed beacons).
   ○ Selection of a pair of synchronized sequences: once at least one pair of sequences of the same location has been noted down, they can be viewed in a synchronized manner. The pair to be viewed must first be selected. To that end, the user can easily make a certain number of queries to the database depending on the noted down fields (filming date, driver, type of headlights, car model, location, recording means, optics etc.). Based on the result of one or more queries, the user finally selects the pair of sequences in which he or she is interested.
   ○ Playback of a pair of synchronized sequences: Once selected, the pair of sequences is ready to be viewed simultaneously. The user can optionally save the video of the synchronized sequences that he or she is viewing. The intention of this option is to share the synchronization results with other people without needing to provide and install the software with the entire database and the original sequences in a new computer. Another interesting option is to change conventional viewing to the "bird's eye view", in which the differences of illumination on the surface of the road can be more easily seen.

### Brief Description of the Drawings

A series of drawings is very briefly described below which aid in better understanding the invention and are expressly related to an embodiment of said invention which is set forth as an illustrative but non-limiting example thereof.

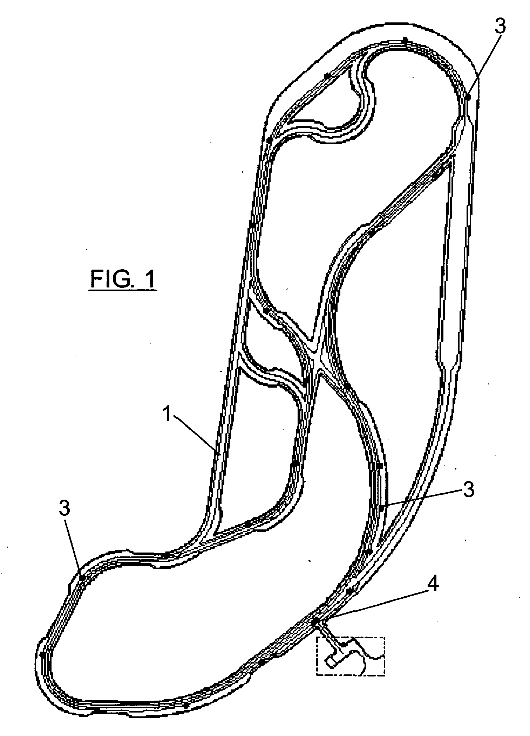

Figure 1 shows the configuration of a circuit, in which the different beacons placed are observed.

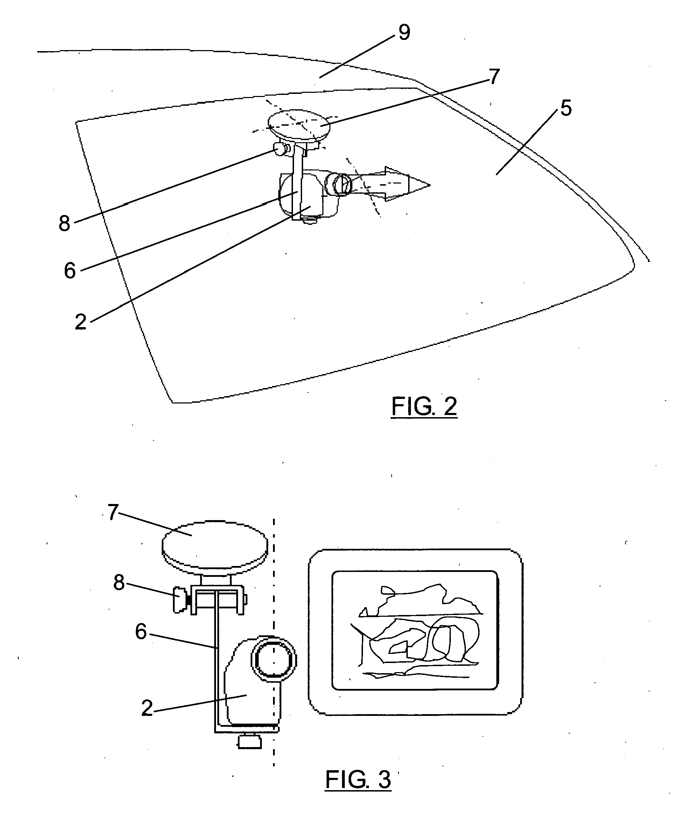

Figure 2 shows the vehicle with the filming equipment assembled in the windshield.
Figure 3 shows the correct positioning of the filming equipment in its roll angle.

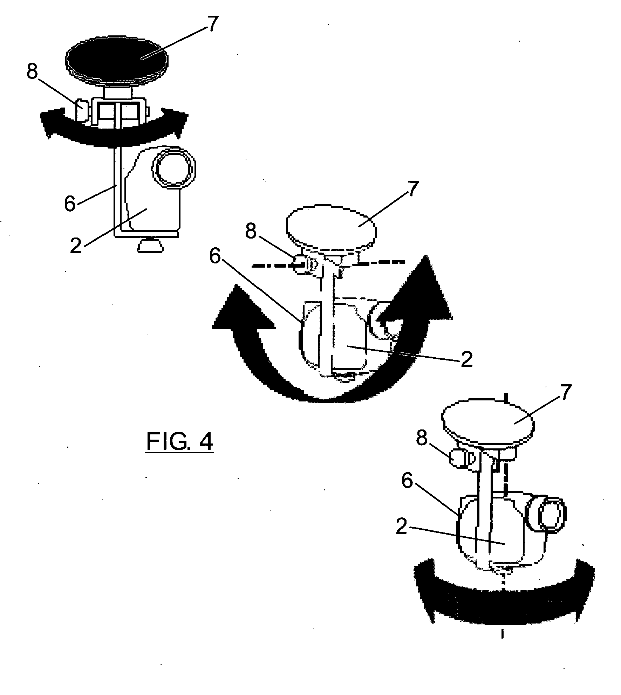

Figure 4 shows the possible rotation angles (yaw, roll, and pitch) for the filming
   equipment.

### Preferred Embodiment of the Invention

The headlight evaluation process comprises at least the following steps:
- placing the beacons [3] along the circuit;
- placing the recording means [2] in the windshield [5] of the vehicle being tested;
- adjusting the recording means [2];
- acquiring sequences;
- synchronizing the results of different tests;

While placing the beacons [3] throughout the circuit [1], reference points are established such that:
- the initial mark [4] comprises at least two beacons [3], one of which is placed at least one meter from the starting line and the other of which is placed at the start itself;
- the following beacons [3] will be placed at a specific distance which will change according to the circuit [1].

The placing of the recording means [2] in the windshield [5] of the vehicle comprises at least the following steps:
- noting down the test data;
- checking the position of the angular field close-up lens;
- loading the tape which will be used to record the tests;
- placing the recording means (2) in the base of the support (6) and adjusting the screws (8) supporting the recording means (2) and those of the different hinges of the support (6);
- adjusting the position and angle of the recording means (2), wherein the adjustments Will be carried out in the area for preparing the circuit (1); wherein the rear wheels of the vehicle (9) are supported on the platform of an elevator; wherein a reference beacon (3) centered in relation to the main axis of the vehicle (9) is placed at a distance of no less than 17 meters from the recording means (2); and wherein to search for the main axis of the vehicle (9) the car (9) can be looked at from behind such that the beacon (3) is seen aligned with the inner rearview mirror and the antenna;
- choosing a centered point in the windshield (5) with a height similar to that of the driver's point of view;
- placing the suction cup (7) in the suitable position in which the optics of the recording means (2) are as close as possible to the previously chosen point;
- adjusting the roll angle wherein the recording means (2) are perpendicular to the ground; the lever of the suction cup (7) is actuated to fix this first degree of freedom; the scene is viewed with the recording means (2) wherein the horizon in the screen is in a horizontal position; and wherein the vehicle (9) rests on a planar surface without any type of inclination;
- adjusting the pitch and yaw angles, wherein to finish centering the recording means (2), the captured image of the beacon (3) that was previously placed in front of the car (9) at 17 m is used; wherein the optimal orientation with the image of said beacon (3) is formed at the center of the image; and wherein the pitch and yaw angles are associated to the movements of the support (6) and of the base of the recording means (2):
   ○ rough adjustment, wherein with the recording means (2) turned on, viewing (without recording) and with the field open as much as possible (without zoom), the beacon (3) will be searched for by moving the recording means (2) (not the suction cup (7)) with the two remaining degrees of freedom (yaw on the screw (8) of the base of the recording means (2), and pitch on the hinge of the support (6) starting from the suction cup (7);
   ○ fine adjustment, wherein the recording means (2) will now work with their maximum zoom, but as the latter is achieved, the attempt will be made to not lose sight of the beacon (3) at the center of the screen; once the image of the beacon (3) has been centered, the attachments (that of the base and that of the support (6)) will be tightened without changing the position of the recording means (2), and wherein the final position will be the maximum field of view (minimum zoom) again.

The adjustment of the parameters of the recording means (2) in turn comprises the following steps:
- adjusting the exposure to the maximum, such that the largest amount of light of a poorly illuminated scene is captured;
- adjusting the focus to infinity;
- adjusting the mode to that of the highest quality;
- adjusting the format to that with the greatest angular field of view;
- deactivating the automatic gain;
- activating progressive recording;
- adjusting the white balance to always the same.

The acquisition of sequences comprises at least the following steps:
- entering the track and doing a lap until being placed at the starting point located before the double mark, at a distance of approximately 50 m, and centered in the lane; wherein the two beacons (3) are furthermore displayed on the screen;
- noting down the test information;
- recording in audio the test information;
- starting the movement such that there is a stable speed upon passing over the starting double mark; the run will be made at a speed comprised between 40 - 60 Km/h; and wherein to finish, the starting double mark will be passed;
- finishing doing the lap to leave the circuit (1) or to return to the starting position; if the test is conducted again with this vehicle, it will go back to the starting point and the entire process of this section will be repeated;
- if the test has ended, removing the support (6) from the windshield (5), releasing the recording means (2) from the support (6) and taking the tape out;
- blocking the tape to prevent an accidental erasure;
- collecting and storing all the material;
- counting the collected beacons (3).

The synchronization of the results comprises at least the following steps:
- initializing the database, wherein the user first has to enter data describing the future video sequences; this data can subsequently be associated to each new input sequence and can be used to retrieve from the database, containing all the sequences, the pair of videos that the user wants to compare, i.e. view together once they have been synchronized; all the data is textual type data (type of headlights, driver, vehicle, recording means (2) etc.) except one, the location; and wherein a location is a special video sequence which is taken as reference for the remaining sequences that are filmed in the same track; a set of beacons (3) are placed within this sequence; and wherein the frame numbers in which they appear in a certain region of the image are stored in the database for the synchronization;
- digitizing the recorded video sequence, wherein the user can control the recording means (2) through the graphical user interface, providing the common play, pause, recording, stop and rewind buttons, controlling the initial and final points in a lap; and wherein the sequences are stored in order to be subsequently noted down;
- noting down the test data, which is the association of data to a captured video sequence, and wherein this data will later be useful for selecting the desired sequence by means of queries to the database of all the sequences;
- synchronizing tests, wherein to synchronize a certain sequence with any other sequence of the same location, all these beacons (3) must be placed again, but in the new sequence;
- selecting a pair of synchronized sequences, wherein once at least one pair of sequences of the same location has been noted down, they can be viewed in a synchronized manner;
- playing a pair of synchronized sequences.

## Claims

1. A headlight evaluation process, **characterized in that** it comprises at least the following steps:
- placing the beacons [3] along the circuit;
- placing the recording means [2] in the windshield [5] of the vehicle being tested;
- adjusting the recording means [2];
- acquiring sequences;
- synchronizing the results of different tests.

2. A headlight evaluation process according to claim 1, **characterized in that** while placing the beacons [3] throughout the circuit [1], reference points are established such that:
- the initial mark [4] comprises at least two beacons [3], one of which is placed at least one meter from the starting line and the other of which is placed at the start itself;
- the following beacons [3] will be placed at a specific distance which will change according to the circuit [1].

3. A headlight evaluation process according to claim 1, **characterized in that** the placing of the recording means [2] in the windshield [5] of the vehicle comprises at least:
- noting down the test data;
- checking the position of the angular field close-up lens;
- loading the tape which will be used to record the tests;
- placing the recording means (2) in the base of the support (6) and adjusting the screws (8) supporting the recording means (2) and those of the different hinges of the support (6);
- adjusting the position and angle of the recording means (2), wherein the adjustments will be carried out in the area for preparing the circuit (1); wherein the rear wheels of the vehicle (9) are supported on the platform of an elevator; wherein a reference beacon (3) centered in relation to the main axis of the vehicle (9) is placed at a distance of no less than 17 meters from the recording means (2); and wherein to search for the main axis of the vehicle (9) the car (9) can be looked at from behind such that the beacon (3) is seen aligned with the inner rearview mirror and the antenna;
- choosing a centered point in the windshield (5) with a height similar to that of the driver's point of view;
- placing the suction cup (7) in the suitable position in which the optics of the recording means (2) are as close as possible to the previously chosen point;
- adjusting the roll angle wherein the recording means (2) are perpendicular to the ground; the lever of the suction cup (7) is actuated to fix this first degree of freedom; the scene is viewed with the recording means (2) wherein the horizon in the screen is in a horizontal position; and wherein the vehicle (9) rests on a planar surface without any type of inclination;
- adjusting the pitch and yaw angles, wherein to finish centering the recording means (2), the captured image of the beacon (3) that was previously placed in front of the car (9) at 17 m is used; wherein the optimal orientation with the image of said beacon (3) is formed at the center of the image; and wherein the pitch and yaw angles are associated to the movements of the support (6) and of the base of the recording means (2):
■ rough adjustment, wherein with the recording means (2) turned on, viewing (without recording) and with the field open as much as possible (without zoom), the beacon (3) will be searched for by moving the recording means (2) (not the suction cup (7)) with the two remaining degrees of freedom (yaw) on the screw (8) of the base of the recording means (2), and pitch on the hinge of the support (6) starting from the suction cup (7);
■ fine adjustment, wherein the recording means (2) will now work with their maximum zoom, but as the latter is achieved, the attempt will be made to not lose sight of the beacon (3) at the center of the screen; once the image of the beacon (3) has been centered, the attachments (that of the base and that of the support (6)) will be tightened without changing the position of the recording means (2), and wherein the final position will be the maximum field of view (minimum zoom) again.

4. A headlight evaluation process according to claim 1, **characterized in that** the adjustment of the parameters of the recording means (2) in turn comprises the following steps:
- adjusting the exposure to the maximum, such that the largest amount of light of a poorly illuminated scene is captured;
- adjusting the focus to infinity;
- adjusting the mode to that of the highest quality;
- adjusting the format to that with the greatest angular field of view;
- deactivating the automatic gain;
- activating progressive recording;
- adjusting the white balance to always the same.

5. A headlight evaluation process according to claim 1, **characterized in that** the acquisition of sequences comprises at least the following steps:
- entering the track and doing a lap until being placed at the starting point located before the double mark, at a distance of approximately 50 m, and centered in the lane; wherein the two beacons (3) are furthermore displayed on the screen;
- noting down the test information;
- recording in audio the test information;
- starting the movement such that there is a stable speed upon passing over the starting double mark; the run is made at a speed comprised between 40 - 60 Km/h; and wherein to finish, the starting double mark will be passed;
- finishing doing the lap to leave the circuit (1) or to return to the starting position; if the test is conducted again with this vehicle, it will go back to the starting point and the entire process of this section will be repeated;
- if the test has ended, removing the support (6) from the windshield (5), releasing the recording means (2) from the support (6) and taking the tape out;
- blocking the tape to prevent an accidental erasure;
- collecting and storing all the material;
- counting the collected beacons (3).

6. A headlight evaluation process according to claim 1, **characterized in that** the synchronization of the results comprises at least the following steps:
- initializing the database, wherein the user first has to enter data describing the future video sequences; this data can subsequently be associated to each new input sequence and can be used to retrieve from the database, containing all the sequences, the pair of videos that the user wants to compare, i.e. view together once they have been synchronized; all the data is textual type data (type of headlights, driver, vehicle, recording means (2) etc.) except one, the location; and wherein a location is a special video sequence which is taken as reference for the remaining sequences that are filmed in the same track; a set of beacons (3) are placed within this sequence; and wherein the frame numbers in which they appear in a certain region of the image are stored in the database for the synchronization;
- digitizing the recorded video sequence, wherein the user can control the recording means (2) through the graphical user interface, providing the common play, pause, recording, stop and rewind buttons, controlling the initial and final points in a lap; and wherein the sequences are stored in order to be subsequently noted down;
- noting down the test data, which is the association of data to a captured video sequence, and wherein this data will later be useful for selecting the desired sequence by means of queries to the database of all the sequences;
- synchronizing tests, wherein to synchronize a certain sequence with any other sequence of the same location, all these beacons (3) must be placed again, but in the new sequence;
- selecting a pair of synchronized sequences, wherein once at least one pair of sequences of the same location has been noted down, they can be viewed in a synchronized manner;
- playing a pair of synchronized sequences.
